# EUROPÄISCHE PATENTSCHRIFT

(11) **EP 1 076 191 B1**
(45) Veröffentlichungstag und Bekanntmachung des Hinweises auf die Patenterteilung: **28.12.2005**
(21) Anmeldenummer: 00116808.7
(22) Anmeldetag: 03.08.2000
(51) Int. Cl.: F16H 55/48, F16H 55/36

(54) **Spannrolle für einen Riementrieb**
Tensioning pulley for a belt drive
Galet tendeur pour transmission par lien souple

(30) Priorität: 10.08.1999 DE 19937681
(43) Veröffentlichungstag der Anmeldung: 14.02.2001
(73) Patentinhaber: ADAM OPEL AG, 65423 Rüsselsheim (DE)
(72) Erfinder: Berghoefer, Uwe, Dipl.-Ing., 64287 Darmstadt (DE); Bednarek, Georg, Dipl.-Ing., 64285 Darmstadt (DE)
(74) Vertreter: Daniel, Ulrich W.P.

(56) Entgegenhaltungen:
- EP-A- 0 710 785
- FR-A- 1 105 980
- US-A- 5 630 769
- PATENT ABSTRACTS OF JAPAN vol. 016, no. 350 (M-1287), 28. Juli 1992 (1992-07-28) & JP 04 107355 A (KOYO SEIKO CO LTD), 8. April 1992 (1992-04-08)

## Beschreibung

Die Erfindung betrifft eine Spannrolle für einen Riementrieb gemäß dem Oberbegriff des Patentanspruches 1.

Derartige Spannrollen, deren Nabe im allgemeinen mit einem Kugellager versehen ist, werden z. B. für die Führung und das Spannen von Zahnriemen für den Nockenwellenantrieb oder auch von Vielkeilriemen für den Antrieb von Nebenaggregaten an Brennkraftmaschinen verwendet.

Mit DE 93 19 394 U1 ist eine solche Spannrolle beschrieben, bei der zur Vermeidung von Schwingungsanregungen im Riementrieb infolge von Unrundheiten, die sich durch Abplattungen auf der Lauffläche zwischen den Rippen einstellen und die zu Laufgeräuschen führen, die aufeinanderfolgenden Rippen, bezogen auf den Mittelpunkt der Spannrolle, unterschiedliche Winkel zueinander einschließen.

Damit gelingt es zwar die Anregung von Schwingungsresonanzen im Riementrieb infolge von Abplattungen auf der Lauffläche zu unterbinden, die Masse innerhalb der Spannrolle bleibt aber dabei nicht gleichmäßig über den Umfang verteilt, sondern ist mehr oder weniger an Massekonzentrationspunkten angeordnet. Da derartige Spannrollen an Brennkraftmaschinen eine erhebliche Drehzahl erreichen können, geht von diesen über den Umfang gleichmäßig verteilten Massekonzentrationspunkten eine Fliehkraftwirkung aus, die zu partiellen Verformungen der Spannrolle führen kann und somit wiederum Laufgeräusche auslöst.

Ein weiterer Grund für die Anregung von geräuschauslösenden Resonanzen bei gleichmäßig über den Umfang verteilten Rippen an Spannrollen ist das Einfallen des Materials auf der Lauffläche der Spannrolle gegenüber jeder der Rippen nach dem Fertigungsprozeß bzw. bei Alterung des Materials.

Ferner ist aus der gattungsgemäßen JP 04-107355 eine Rolle mit einer mikrowellengeformten Oberfläche zum verbesserten Eingriff eines Übertragungsriemens bekannt, bei der die Rippen in der Rolle versetzt zueinander angeordnet sind.

Aufgabe der Erfindung ist es, eine Spannrolle der gattungsgemäßen Art zu schaffen, deren Masse ohne punktuelle Anhäufungen auf dem Umfang gleichmäßig verteilt ist und die gegenüber anderen derartigen Spannrollen ein reduziertes Laufgeräusch hat.

Die Erfindung löst diese Aufgabe mit den kennzeichnenden Merkmalen des Patentanspruches 1. Vorteilhafte Weiterbildungen der Erfindung sind Gegenstand der Unteransprüche.

Durch den Versatz der Rippen beidseits der Radscheibe um einen halben Rippenteilungswinkel treffen die Rippen jeweils wechselseitig auf den Außenring auf. Somit entstehen auf der Lauffläche der Spannrolle infolge des Schrumpfverhaltens des Kunststoffes während und nach dem Herstellungsprozeß nur auf halber Breite Einfall-Dellen, die außerdem von einer Seite zur anderen auf der Lauffläche versetzt sind. Der auf der Lauffläche aufliegende Riemen findet eine nahezu ideal runde Rollenform. Eine Schwingungsanregung durch die abwechselnd links und rechts der Lauffläche auftretenden Einfall-Dellen, denen jeweils immer eine unverformte Teilfläche gegenüberliegt, erfolgt nicht.

Durch die gleichmäßige Masseverteilung über den Umfang der Spannrolle ohne partielle Massekonzentrationen erfolgt auch keine partielle Verformung durch Fliehkraftwirkung. Die Lauffläche der Spannrolle behält auch bei hohen Drehzahlen ihre Form. Damit kann auch durch Verformung keine Schwingungsanregung ausgelöst werden. Das Laufgeräusch einer solchen Spannrolle sowie des gesamten Riementriebes bleibt gering.

Da es im Sinne der Erfindung ist, die Masseverteilung an der Spannrolle über den Umfang vollständig gleichmäßig zu halten, ist es von Vorteil, wenn die aufeinanderfolgenden Rippen an jeder der beiden Seiten der Radscheibe zueinander gleiche Rippenteilungswinkel einschließen. Damit können auch Vorteile bei der Herstellung der Spannrolle, z. B. hinsichtlich des Formfüllverhaltens bei einem Spritzwerkzeug oder auch bei der Werkzeugherstellung eintreten.

Die Rippen beidseits der Radscheibe können in ihrer axialen Breite vorteilhaft so ausgeführt sein, dass sie am Ansatz zum Außenring bis zum axial äußeren Rand des Außenringes reichen. Im übrigen Verlauf zur Nabe hin kann die axiale Breite der Rippen jedoch geringer sein. Durch diese Gestaltung der Rippen wird die Einfall-Delle an der Lauffläche der Spannrolle gegenüber der Rippe reduziert.

Ein Ausführungsbeispiel der Erfindung ist nachstehend anhand einer Zeichnung näher beschrieben. Es zeigen
- Fig. 1:: die Ansicht einer Spannrolle nach der Erfindung;
- Fig. 2:: einen Schnitt entlang der Linie A-A in Figur 1;
- Fig. 3:: einen Schnitt entlang der Linie B-B in Figur 2;
- Fig. 4:: einen Schnitt entlang der Linie C-C in Figur 2.

Eine Spannrolle 1 aus gießfähigem Kunststoff hat eine Nabe 2, einen Außenring 3 und eine sich radial zwischen der Nabe 2 und dem Außenring 3 erstreckende Radscheibe 4. Der Außenring 3 bildet mit seiner radial nach außengewandten Seite eine Lauffläche 5 für einen zu spannenden Riemen. Die Nabe 2 umfängt ein Wälzlager 6, auf dem die Spannrolle 1 drehbar gelagert ist.

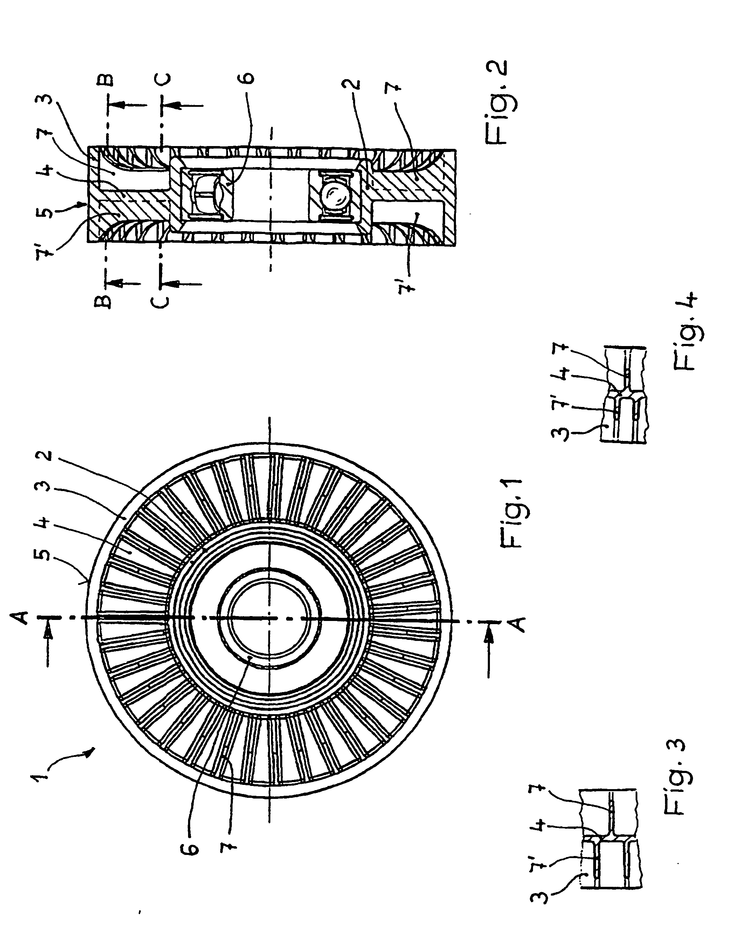

Entlang der Radscheibe 4 sind beidseits Rippen 7, 7' in gleichmäßigem Winkelabstand angeordnet. Die Rippen 7, 7' verbinden dabei die Nabe 2 mit dem Außenring 3. Die axiale Breite der Rippen 7, 7' ist nahe des Außenringes 3 der Breite des Außenringes 3 angepaßt, während sie zur Mitte in Richtung der Nabe 2 hin abnimmt. Dies wird auch durch die Figuren 3 und 4 verdeutlicht. Die Rippen 7, 7' an jeder der beiden Seiten der Radscheibe 4 schließen zueinander gleiche Rippenteilungswinkel ein. Die Rippen 7 an der einen Seite der Radscheibe 4 sind gegenüber den Rippen 7' auf der anderen Seite der Radscheibe 4 um einen halben Rippenteilungswinkel versetzt angeordnet, so dass im Schnitt betrachtet die Rippen 7 der einen Seite der Radscheibe 4 in der Mitte zwischen den Rippen 7' der anderen Seite der Radscheibe 4 stehen (Figur 3 und Figur 4).

Bei einer so ausgebildeten Spannrolle 1 zeichnet sich eine Einfall-Delle gegenüber den Ansätzen der Rippen 7, 7' nur über die halbe Breite an der Lauffläche 5 ab, während die andere halbe Breite formstabil bleibt. Ein über die Lauffläche 5 geführter Riemen wird somit durch die Einfall-Dellen nicht zum Schwingen angeregt. Die über den Umfang gleichmäßige Verteilung der Masse ohne punktuelle Massekonzentrationen gewährleistet, dass die Spannrolle 1 auch bei hohen Drehzahlen nicht durch Fliehkräfte verformt und damit auch nicht unrund wird. Damit wird gesichert, dass der über sie laufende Riemen nicht zum Schwingen angeregt wird.

Selbstverständlich entspricht es der Erfindung, wenn - insbesondere bei größeren Spannrollen - die Rippen in ihrer Länge durch einen Zwischenring zwischen Nabe und Außenring unterbrochen sind. Dabei kann die Anzahl der Rippen innerhalb des Zwischenringes kleiner, vorzugsweise halb so groß, sein wie die Anzahl der Rippen zwischen Zwischenring und Außenring. Wichtig nach der Erfindung ist lediglich, dass die Rippen an den beiden Seiten der Radscheibe gleichmäßig verteilt und um einen halben Rippenteilungswinkel gegeneinander versetzt angeordnet sind.

## Patentansprüche

1. Spannrolle für einen Riementrieb aus einem gießfähigen Werkstoff, insbesondere einem Kunststoff, umfassend eine Nabe und einen Außenring, die mit einer Radscheibe und beidseits der Radscheibe radial angeordnete Rippen miteinander verbunden sind, wobei, die Rippen (7) an der einen Seite der Radscheibe (4) gegenüber den Rippen (7') auf der anderen Seite der Radscheibe (4) um einen halben Rippenteilungswinkel, bezogen auf den Mittelpunkt der Spannrolle (1), versetzt angeordnet sind, **dadurch gekennzeichnet, dass** die axiale Breite der Rippen (7, 7') über ihre wesentliche radiale Erstreckung gleichbleibend ist und zumindest am Außenring (3) kontinuierlich bis zum Rand des Außenringes (3) geführt ist.

2. Spannrolle nach Anspruch 1, **dadurch gekennzeichnet, dass** die aufeinanderfolgenden Rippen (7, 7') an jeder der beiden Seiten der Radscheibe (4) zueinander gleiche Rippenteilungswinkel einschließen.

## Claims

1. Tensioning pulley for a belt drive made of a pourable material, in particular a plastics material, comprising a hub and an outer ring, which are connected to one another by a wheel disk and ribs disposed radially on both sides of the wheel disk, wherein, that the ribs (7) on the one side of the wheel disk (4) are arranged, in relation to centre of the tensioning pulley (1), offset relative to the ribs (7') at the other side of the wheel disk (4) by half of the rib pitch angle, **characterized in that** the axial width of the ribs (7, 7') is constant over their essential radial extent and at least at the outer ring (3) extends continuously up to the edge of the outer ring (3).

2. Tensioning pulley according to claim 1, **characterized in that** the successive ribs (7, 7') on each of the two sides of the wheel disk (4) include mutually identical rib pitch angles.

## Revendications

1. Galet tendeur pour un entraînement de courroie fabriqué dans une matière fluable, en particulier une matière plastique, comprenant un moyeu et une bague extérieure qui sont reliés ensemble à un disque de roue et à des nervures disposées des deux côtés du disque de roue dans le sens axial, les nervures (7) sur un côté du disque de roue (4) étant disposées de manière décalée d'un demi pas angulaire de nervure par rapport au centre du galet tendeur (1), par rapport aux nervures (7') sur l'autre côté du disque de roue (4), **caractérisé en ce que** la largeur axiale des nervures (7, 7') reste la même sur l'essentiel de son extension radiale et est continue, au moins au niveau de la bague extérieure (3), jusqu'au bord de la bague extérieure (3).

2. Galet tendeur selon la revendication 1, **caractérisé en ce que** les nervures consécutives (7, 7') sur chacun des deux côtés du disque de roue (4) comportent des pas angulaires de nervures identiques les uns par rapport aux autres.
